# EUROPEAN PATENT APPLICATION

(11) **EP 4 644 584 A2**
(43) Date of publication of application: **05.11.2025**
(21) Application number: 25173263.2
(22) Date of filing: 29.04.2025
(51) Int. Cl.: C25B 1/04, C25B 9/19, C25B 9/75, C25B 9/77, C25B 9/63, C25B 11/032

(54) **ADHESIVE-FIXED ELECTROLYSIS MODULE**

(30) Priority: 30.04.2024 KR 20240057667
(71) Applicant: Techcross Inc., Seoul 06167 (KR)
(72) Inventor: KU, Jahun, Hanam-si 2505-1405 (KR); JUNG, Hyungrak, Pyeongtaek-si (KR); LEE, Taehoon, Hwaseong-si (KR)
(74) Representative: Jacobacci Coralis Harle

(57) **Abstract**

The present invention is an adhesive-fixed electrolysis module comprising a single stack, the single stack having a separator, a pair of bipolar plates, a pair of gaskets, a pair of diffusion layers, a pair of electrodes, and a cell frame, wherein the bipolar plates, the gaskets, the diffusion layers, and the electrodes are sequentially arranged on the cathode and anode sides, respectively, with respect to the separator, forming a symmetrical structure, wherein the separator, the bipolar plates, the gaskets, the diffusion layers, and the electrodes are stacked in a zero-gap manner within the cell frame, and wherein the bipolar plates are adhered and fixed to the cell frame using an adhesive, thereby simplifying product assembly and reducing assembly costs compared to a single stack fixing method using welding, riveting, bolting, etc. between conventional parts.

## Description

### TECHNICAL FIELD OF INVENTION

The present invention relates to an adhesive-fixed alkaline water electrolysis module capable of assembling a single stack by fixing a bipolar plate and a cell frame with an adhesive.

### BACKGROUND INFORMATION AND PRIOR ART

Water electrolysis is a technology for producing high-purity (99.999%) green hydrogen by electrolyzing water, and includes alkaline water electrolysis (AWE), polymer electrolyte membrane water electrolysis (PEMWE), and solid oxide electrolyser cell (SOEC) technologies.

Among these, alkaline water electrolysis is a technology that generates hydrogen and oxygen using an alkaline solution such as KOH or NaOH as an electrolyte. This alkaline water electrolysis has been studied for the longest time, and its stability and price competitiveness have been proven, and its technological maturity is high. Specifically, alkaline water electrolysis uses nickel or stainless steel as a catalyst material rather than expensive precious metal catalysts, so the initial installation cost is relatively low, the system life is long, and it is a technology suitable for large-scale hydrogen production.

The electrolysis module used in this alkaline water electrolysis is a core component of the electrolysis facility that decomposes the supplied water to produce actual hydrogen, and is made by stacking several to hundreds of unit parts such as anodes, cathodes, and separators. This electrolysis module is made by stacking multiple single stacks, and each single stack is made by placing a hydrogen generation electrode, a diffusion layer, and a bipolar plate on one side of the separator, and an oxygen generation electrode, a diffusion layer, and a bipolar plate on the other side.

Conventional alkaline water electrolysis modules can be divided into single-cell stacking type and bolt-pressed stacking type electrolysis modules. The single-cell stacking type electrolysis module is a modification of the electrolysis device applied to the conventional chloro-alkali process, and is formed by connecting a desired number of single cells having independent input/output structures for gas, liquid, and current. In addition, the bolt-pressed stacking type electrolysis module is formed by sequentially connecting cell frames equipped with end plates, current collectors, gaskets, mesh-type diffusion layers, electrodes, and separators, stacking a desired number of single cells, fixing them with bolts, and then connecting the input/outputs of gas, liquid, and current as one.

The aforementioned single-cell stacking type electrolysis module can secure product stability and technological prowess by changing the purpose of existing caustic soda production facilities into electrolysis equipment. However, this single-cell stacking type electrolysis module has the disadvantage that the size and volume of the single cell increases and the number of parts increases because individual channels are formed in the single cell. In particular, the single-cell stacking type electrolysis module has the problem that the electrolysis efficiency decreases because the consistency between the stack components is low compared to the bolt-pressed stacking type electrolysis module when tens to hundreds of single cells are stacked. In addition, although the single-cell stacking type electrolysis module has secured product stability and technological prowess, the volume is large and the single cells have independent gas/liquid channel structures, so the product configuration is complex and repair and replacement are difficult.

Meanwhile, the bolt-pressed stacking type electrolysis module can secure excellent performance by simplifying the gas and liquid channels and reducing the internal resistance due to the continuous connection of single cells. However, the bolt-pressed stacking type electrolysis module has the disadvantage that the number of parts increases due to the continuous connection of each part, the performance of the entire product is adversely affected in case of incorrect assembly, and replacement and repair are difficult. In particular, the bolt-pressed stacking type electrolysis module has the disadvantage that the electrolysis system operation must be stopped for a long time and on-site measures are difficult because the entire stack must be separated and the corresponding part must be replaced when a part is damaged or the performance deteriorates.
Prior art document 1: Korean Patent Publication No. 10-2021-0010231 (January 27, 2021)
Prior art document 2: Korean Patent Publication No. 10-2003-0090653 (November 28, 2003)
Prior art document 3: Korean Patent Registration No. 10-1016445 (February 14, 2011)

### SUMMARY OF THE INVENTION

The present invention was invented to solve the above-mentioned problem, and the purpose is to provide an adhesive-fixed electrolysis module that can simply assemble a stack by adhesively fixing a bipolar plate and a cell frame using an adhesive.

In addition, the present invention aims to provide an adhesive-fixed electrolysis module that reduces internal resistance and simplifies internal components by stacking stacks assembled in an adhesive-fixing using a zero-gap manner, and can flexibly respond to various capacities.

In order to achieve the above-mentioned purpose, the adhesive-fixed electrolysis module according to the present invention includes a single stack comprising a separator, a pair of bipolar plates, a pair of gaskets, a pair of diffusion layers, a pair of electrodes and a cell frame; wherein the bipolar plates, the gaskets, the diffusion layers, and the electrodes are sequentially arranged on the cathode and anode sides, respectively, with respect to the separator, forming a symmetrical structure; wherein the separator, the bipolar plates, the gaskets, the diffusion layers, and the electrodes are stacked in a zero-gap manner within the cell frame; wherein the bipolar plates are adhered and fixed to the cell frame using an adhesive.

Preferably, an adhesive application line is formed on each of the edge portions of both sides of the cell frame, and each of the bipolar plates is adhesively fixed to the cell frame by an adhesive applied to the adhesive application line.

More preferably, the adhesive has heat resistance and alkali resistance, and is a thermoplastic, room temperature curing, two-component, or one-component adhesive.

More preferably, the depth of the adhesive application line of the cell frame is determined according to the viscosity of the adhesive and is 0.5 to 2 times the thickness of the gasket, and the width of the adhesive application line of the cell frame is determined according to the viscosity of the adhesive and is 0.5 to 2 times the depth of the adhesive application line.

In addition, the present invention further includes a physical fastening means for fastening the cell frame and the bipolar plates, wherein the physical fastening means includes a first fastening portion protrudingly formed on an outer edge of the cell frame and a second fastening portion formed on an outer edge of the bipolar plate and fastened to the first fastening portion, and the first fastening portion and the second fastening portion are fitted together in a snap-fit manner.

Preferably, the second fastening portion includes a folded portion that is bent from the outer edge of the bipolar plate toward the cell frame and wraps around the outer edge of the cell frame, and a recessed portion into which the first fastening portion is fitted by cutting the center portion of the folded portion; the first fastening portion has a hook shape with its end protruding outward, and is snap-fitted into the recessed portion of the second fastening portion.

Preferably, the cell frame has a receiving portion at the center portion, in which the separator, the gaskets, the diffusion layers, and the electrodes are accommodated, and has gas channels for discharging hydrogen and oxygen, as well as electrolyte channels for inflowing and outflowing electrolyte in the outer portion; wherein the bipolar plate has gas channels and electrolyte channels corresponding to the gas channels and the electrolyte channels of the cell frame; and wherein a plurality of the single stacks are connected by a bolt-pressed method or a hydraulic-pressed method to form a electrolysis module.

More preferably, the cell frame includes a gasket leakage prevention protrusion having protrusions arranged in two or three layers so as to surround the periphery of the gas channels and the electrolyte channels, and the gasket has two or three layers of protrusions that are fitted between the protrusions of the gasket leakage prevention protrusion, so that when the single stack is compressed, the gasket is compressed to the cell frame in a snap-fitting manner.

According to the present invention, by fixing the cell frame and the bipolar plates with an adhesive to form a stack, the assembly of the stack is simple and the assembly costs can be reduced compared to the conventional stack fixing method using welding, riveting, bolting, etc. between parts.

In addition, according to the present invention, since the cell frame and the bipolar plates are first fixed with an adhesive and then additionally joined by the physical fastening means, the stack can be assembled more firmly. In addition, since the stack component parts are fixed to an accurate position without any gaps by the physical fastening means, the operating efficiency of the electrolysis module can be prevented from being reduced.

### BRIEF DESCRIPTION OF THE DRAWINGS

Figure 1 is an exploded perspective view illustrating a single stack of an adhesive-fixed electrolysis module according to the present invention.
Figure 2 is a front view illustrating a cell frame of a single stack of an adhesive-fixed electrolysis module according to the present invention.
Figure 3 is a perspective view illustrating a physical fastening means of an adhesive-fixed electrolysis module according to the present invention, showing a state in which the cell frame and the bipolar plate are fastened.

### DETAILED DESCRIPTION OF THE EXEMPLARY EMBODIMENTS

Hereinafter, a preferred embodiment of an adhesive-fixed electrolysis module according to the present invention will be described with reference to the attached drawings. For reference, in describing the present invention below, terms referring to components of the present invention are named in consideration of the functions of each component, and therefore should not be understood as limiting the technical components of the present invention.

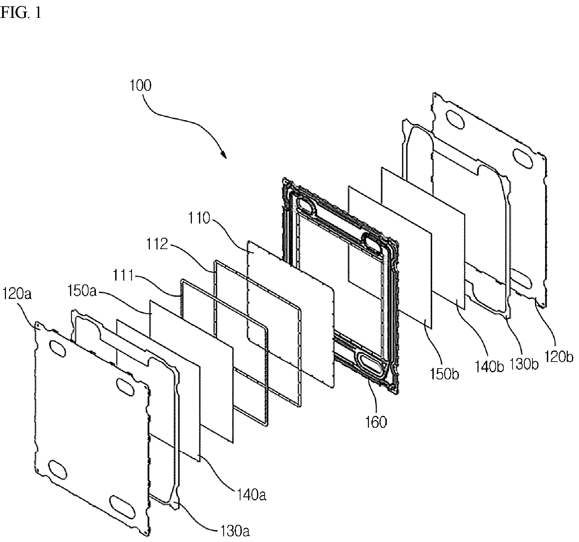

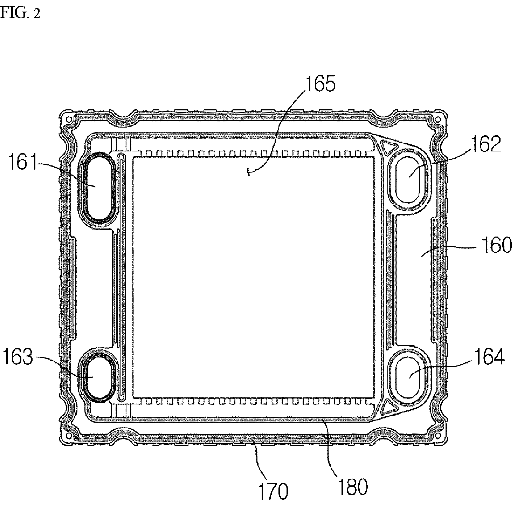

Referring to FIGS. 1 and 2, the adhesive-fixed electrolysis module according to the present invention comprises at least one single stack 100, each of which comprises a separator 110, a pair of bipolar plates 120a, 120b, a pair of gaskets 130a, 130b, a pair of diffusion layers 140a, 140b, a pair of electrodes 150a, 150b and a cell frame 160. The bipolar plates 120a, 120b, the gaskets 130a, 130b, the diffusion layers 140a, 140b, and the electrodes 150a, 150b are sequentially arranged on the cathode side and the anode side, respectively, with respect to the separator 110, forming a symmetrical structure. In other words, the bipolar plate 120a, the gasket 130a, the diffusion layer 140a, and the electrode 150a are sequentially arranged on the cathode side with respect to the separator 110, and the bipolar plate 120b, the gasket 130b, the diffusion layer 140b, and the electrode 150b are sequentially arranged on the anode side with respect to the separator 110.

Specifically, a single stack 100 is configured by fastening the bipolar plates 120a, 120b and the cell frame 160 so that stack components, i.e., the separator 110, the gaskets 130a, 130b, the diffusion layers 140a, 140b, and the electrodes 150a, 150b are accommodated in the cell frame 160. That is, inside the cell frame 160, the bipolar plate 120a, the gasket 130a, the diffusion body 140a, and the electrode 150a on the cathode side are stacked symmetrically with respect to the bipolar plate 120b, the gasket 130b, the diffusion layer 140b, and the electrode 150b on the anode side, relative to the separator 110.

The cell frame 160 may be made of a material resistant to strong alkali corrosion, such as PS (Polystyrene), PES (Polyethersulfone), PP (Polypropylene), PPSU (polyphenylsulfone), PTFE (Polytetrafluoroethylene), or stainless steel. The cell frame 160 is configured with separate anode and cathode chambers, and includes gas channels 161, 162 for discharging hydrogen and oxygen, and electrolyte channels 163, 164 for inflowing and outflowing electrolyte. Here, the cell frame 160 may be disposed between a pair of cell frame supports (not shown).

The bipolar plates 120a, 120b are metal plates that are respectively arranged on the outermost side of a single stack 100 and serve as busbars that apply external current to internal electrodes 150a, 150b, and serve to establish electrical connections between the single stacks 100 that are stacked to each other. The bipolar plates 120a, 120b have gas channels for discharging hydrogen and oxygen and electrolyte channels for inflowing and outflowing electrolyte.

The gaskets 130a, 130b, which serve to prevent leakage between each of the components constituting the single stack 100, are inserted between the bipolar plates 120a, 120b and the cell frame 160. The gaskets 130a, 130b may be made of a material resistant to strong alkali corrosion, such as EPDM (Ethylene Propylene Diene M-Cl ass Rubber), fluorine-based rubber, or PTFE (Polytetrafluoroethylene). In addition, the gaskets 130a, 130b are formed in a double protrusion shape to provide airtightness between the stacked components, thereby preventing liquid or gas from leaking between the components.

The diffusion layers 140a, 140b is arranged on one side of the electrode 150a, 150b facing the bipolar plate 120a, 120b and serves to evenly diffusing the fluid supplied from the separator 110 to the electrode 150a on the cathode side and the electrode 150b on the anode side. The diffusion layers 140a, 140b is a porous body manufactured in the form of a mesh, knit, or foam, and may have, for example, a pore size ranging from 10 *µ*m to 10 mm and a thickness ranging from 0.1 mm to 20 mm.

The electrodes 150a, 150b are disposed between the separator 110 and the diffusion layers 140a, 150b. The electrodes 150a, 150b can be mainly made of transition metals such as Ni, Fe, Co, and Mo and can be manufactured by coating, plasma coating, or plating a mixed oxide, which is formed by combining the transition metals, onto a metal porous body.

The separator 110 is disposed between a pair of electrodes 150a, 150b. The separator 110 can be a porous composite in which ceramic particles are dispersed to ensure durability in a strong alkaline environment. For example, the separator 110 can be manufactured by spraying a zirconium mixture on a PPS (Polyphenylene sulfide) or PPSU (polyphenylsulfone) polymer matrix support.

Additionally, the separator 110 is fixed inside a separator fixing frame 111, and a separator gasket 112 that prevents leakage around the separator 110 may be disposed between the separator fixing frame 111 and the separator 110.

Here, a receiving portion 165 is formed in the central portion of the cell frame 160 for stacking and arranging the separator 110, a pair of gaskets 130a, 130b, a pair of diffusion layers 140a, 140b, and a pair of electrodes 150a, 150b. In addition, gas channels 161, 162 for discharging hydrogen and oxygen and electrolyte channels 163, 164 for inflowing and outflowing electrolyte are formed in the outer portion of the cell frame 165. In addition, an adhesive application line 170 is formed on the edges of both sides of the cell frame 160. An adhesive is applied to this adhesive application line 170, and the bipolar plates 120a, 120b are fixed to both sides of the cell frame 160 by an adhesive method, respectively.

That is, the separator 110, the pair of gaskets 130a, 130b, the pair of diffusion layers 140a, 140b, and the pair of electrodes 150a, 150b are accommodated and stacked inside the cell frame 160, and the bipolar plates 120a, 120b are respectively adhesively fixed to both sides of the cell frame 160 by an adhesive to form the single stack 100. In particular, the separator 110, the gaskets 130a, 130b, the diffusion layers 140a, 140b, and the electrodes 150a, 150b are stacked within the cell frame 160 and the pair of bipolar plates 120a, 120b in a zero-gap manner, ensuring smooth current connection and minimizing current loss due to reduced resistance.

In this way, according to the present invention, a single stack 100 is assembled by adhesively fixing only the cell frame 160 and the bipolars 120a, 120b without the need to bond or fasten other stack components (separator, gasket, diffusion body, electrode). This approach simplifies product assembly and reduces assembly costs compared to conventional electrolysis stacks, which are assembled by securing components using methods such as welding, riveting, and bolting.

Preferably, the adhesive has heat resistance and alkali resistance, and a thermoplastic, roomtemperature-curing, one-component, or two-component adhesive can be used. Specifically, the adhesive may have durability against high temperatures of 100°C or higher and strong alkalinity generated during electrolysis operation.

In addition, the depth of the adhesive application line 170 formed on the cell frame 160 is determined according to the viscosity of the adhesive, and can be designed to be 0.5 to 2 times the thickness of the gasket 130a, 130b. In addition, the width of the adhesive application line 170 is determined according to the viscosity of the adhesive, and can be designed to be 0.5 to 2 times the depth of the adhesive application line.

Preferably, the adhesive-fixed electrolysis module according to the present invention can be configured to accommodate various electrolysis capacities by stacking a desired number of single stacks 100 using a bolt-pressed method or a hydraulic-pressed method, depending on the required electrolysis operation capacity.

Although not shown in the drawings, when assembling single stacks 100 using a bolt-pressed method, a desired number of single stacks can be stacked onto a stacking frame according to the required electrolysis operation capacity. The electrolysis module can then be constructed by connecting the single stacks using bolts and insert nuts in the bolt-pressed method.

In addition, when connecting a plurality of single stacks 100 using a hydraulic-pressed method, a desired number of single stacks can be stacked onto a stacking frame according to the required electrolysis operation capacity. The assembled single stacks can then be compressed and secured using a hydraulic press.

Meanwhile, the cell frame 160 includes a gasket leakage prevention protrusion part 180, which has protrusions arranged in two or three layers to surround the periphery of the gas channels 161, 162 and the electrolyte channels 163, 164. In addition, the gaskets 130a, 130b described above has two or three layers of protrusions that are interference fit between the protrusions of the gasket leakage prevention protrusion part 180.

By the interference fit between the gaskets 130a, 130b and the gasket leak prevention protrusion part 180, the gaskets 130a, 130b and the cell frame 160 to be securely compressed in a snap-fit manner when the stack components are compressed during the assembly of the single stack 100.

Preferably, the protrusions of the gaskets 130a, 130b and the gasket leak prevention protrusion part 180 have a tooth-like shape and are arranged symmetrically in the vertical direction. When the single stack 100 is compressed, these protrusions deform in opposite directions and interlock, increasing the sealing effect and thereby preventing the leakage of gas and fluid.

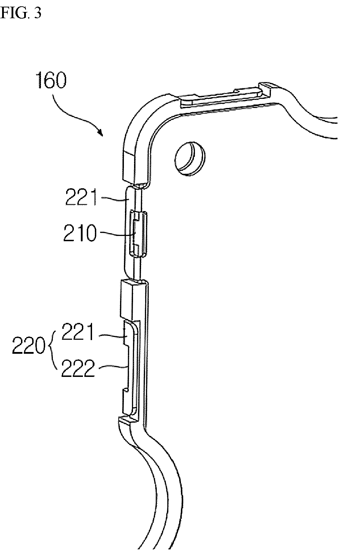

Referring to FIG. 3, the adhesive-fixed electrolysis module according to the present invention can include a physical fastening means for physically fastening a pair of bipolar plates 120a, 120b to the cell frame 160. This physical fastening means is for physically securing the bipolar plates 120a, 120b to both sides of the cell frame 160, respectively.

Specifically, the physical fastening means includes first fastening portions 210 formed on an outer edge portion of the cell frame 160 and second fastening portions 220 formed on outer edge portions of the bipolar plates 120a, 120b which are fastened to the first fastening portions 210. The first fastening portions 210 have a protrusion shape that extending from the outer edge portion of the cell frame 160.

The second fastening portion 220 includes a folded portion 221 that is folded from the outer edge portion of the bipolar plate 120a, 120b toward the cell frame 160 and wraps around the outer edge portion of the cell frame 160, and a recessed portion 222 formed at the central portion of the folded portion 221 so that the first fastening portion 210 is fitted into the second fastening portion. In addition, the first fastening portion 210 and the second fastening portion 220 are secured in a snap-fit manner.

Preferably, the cell frame 160 has a pair of first fastening portions 210 arranged vertically and adjacently on one side of the outer edge portion. One of the pair of first fastening portions 210 is fitted into the recessed portion 222 of the second fastening portion 220 of one of the bipolar plates 120a, and the other of the pair of first fastening portions 210 is fitted into the recessed portion 222 of the second fastening portion 220 of the other of the bipolar plates 120b.

In addition, the first fastening portion 210 of the cell frame 160 may be formed in a hook shape with an end protruding outward so as to be firmly fitted into the recessed portion 222 of the second fastening portion 220. With this configuration, when the first fastening portion 210 of the cell frame 160 is engaged with the recessed portion 222 of the second fastening portion 220 of the bipolar plate 120a, 120b, the first fastening portion 210 may be engaged with the recessed portion 222 of the second fastening portion 220 in a snap-fit manner while sliding on the folded portion 221 of the second fastening portion 210.

In addition, a pair of adjacently arranged first fastening portions 210 may be respectively arranged on four sides of the outer edge of the cell frame 160. In correspondence with the first fastening portions 210, the second fastening portion 220 may also be arranged on each of the four sides of the outer edge of the bipolar plate 120a, 120b.

In this way, in the adhesive-fixed electrolysis module according to the present invention, the cell frame 160 and the bipolar plates 120a, 120b are first fixed with an adhesive and then additionally joined by a physical fastening means, so that the cell frame 160 and the bipolar plates 120a, 120b of the single stack 100 can be assembled more firmly and stably.

The embodiments of the present invention described above are merely illustrative of the technical idea of the present invention, and the scope of protection of the present invention should be interpreted by the following patent claims. In addition, those with ordinary knowledge in the technical field to which the present invention belongs will be able to make various modifications and variations without departing from the essential characteristics of the present invention, and all technical ideas within the scope equivalent to the present invention should be interpreted as being included in the scope of the rights of the present invention.

## Claims

1. An adhesive-fixed electrolysis module comprising a single stack, the single stack comprising:
a separator, a pair of bipolar plates, a pair of gaskets, a pair of diffusion layers, a pair of electrodes, and a cell frame,
wherein the bipolar plates, the gaskets, the diffusion layers, and the electrodes are sequentially arranged on the cathode and anode sides, respectively, with respect to the separator, forming a symmetrical structure,
wherein the separator, the bipolar plates, the gaskets, the diffusion layers, and the electrodes are stacked in a zero-gap manner within the cell frame, and
wherein the bipolar plates are adhered and fixed to the cell frame using an adhesive.

2. The adhesive-fixed electrolysis module according to claim 1, wherein an adhesive application line is formed on each of the edge portions of both sides of the cell frame, and each of the bipolar plates is adhesively fixed to the cell frame by an adhesive applied to the adhesive application line.

3. The adhesive-fixed electrolysis module according to claim 2, wherein the adhesive has heat resistance and alkali resistance, and is a thermoplastic, room temperature curing, two-component, or one-component adhesive.

4. The adhesive-fixed electrolysis module according to claim 3, wherein the depth of the adhesive application line of the cell frame is determined according to the viscosity of the adhesive and is 0.5 to 2 times the thickness of the gasket, and the width of the adhesive application line of the cell frame is determined according to the viscosity of the adhesive and is 0.5 to 2 times the depth of the adhesive application line.

5. The adhesive-fixed electrolysis module according to claim 2, further comprising a physical fastening means for fastening the cell frame and the bipolar plates,
wherein the physical fastening means includes a first fastening portion protrudingly formed on an outer edge of the cell frame, and a second fastening portion formed on an outer edge of the bipolar plate and fastened to the first fastening portion, and
wherein the first fastening portion and the second fastening portion are fitted together in a snap-fit manner.

6. The adhesive-fixed electrolysis module according to claim 5, wherein the second fastening portion includes a folded portion that is bent from the outer edge of the bipolar plate toward the cell frame and wraps around the outer edge of the cell frame, and a recessed portion into which the first fastening portion is fitted by cutting the center portion of the folded portion, and
wherein the first fastening portion has a hook shape with its end protruding outward, and is snap-fitted into the recessed portion of the second fastening portion.

7. The adhesive-fixed electrolysis module according to claim 1, wherein the cell frame has a receiving portion at the center portion, in which the separator, the gaskets, the diffusion layers, and the electrodes are accommodated, and has gas channels for discharging hydrogen and oxygen, as well as electrolyte channels for inflowing and outflowing electrolyte in the outer portion,
wherein the bipolar plate has gas channels and electrolyte channels corresponding to the gas channels and the electrolyte channels of the cell frame, and
wherein a plurality of the single stacks are connected by a bolt-pressed method or a hydraulic-pressed method to form an electrolysis module.

8. The adhesive-fixed electrolysis module according to claim 7, wherein the cell frame includes a gasket leakage prevention protrusion having protrusions arranged in two or three layers so as to surround the periphery of the gas channels and the electrolyte channels, and
wherein the gasket has two or three layers of protrusions that are fitted between the protrusions of the gasket leakage prevention protrusion, so that when the single stack is compressed, the gasket is compressed to the cell frame in a snap-fitting manner.
